(19) **Europäisches Patentamt**
**European Patent Office**
**Office européen des brevets**

(11) **EP 4 105 369 B1**

(12) **EUROPÄISCHE PATENTSCHRIFT**

(45) Veröffentlichungstag und Bekanntmachung des Hinweises auf die Patenterteilung:
**27.03.2024 Patentblatt 2024/13**

(21) Anmeldenummer: **22168934.2**

(22) Anmeldetag: **20.04.2022**

(51) Internationale Patentklassifikation (IPC):
*D02G 3/48* (2006.01)  *B60C 9/00* (2006.01)
*B60C 9/20* (2006.01)  *B60C 9/02* (2006.01)
*D07B 1/06* (2006.01)

(52) Gemeinsame Patentklassifikation (CPC):
**B60C 9/0007; B60C 9/2006;** B60C 2009/0078;
B60C 2009/0092; B60C 2009/0269;
B60C 2009/2061; B60C 2009/2067;
B60C 2009/208; D07B 1/062; D07B 2401/2005

(54) **STAHLKORD-VERBUNDMATERIAL MIT OPTIMIERTER STAHLGUMMIERUNG FÜR FAHRZEUGREIFEN**

COMPOSITE STEEL CORD MATERIAL WITH OPTIMISED STEEL REINFORCEMENT FOR VEHICLE TYRES

MATIÈRE COMPOSITE À CÂBLE D'ACIER À REVÊTEMENT EN CAOUTCHOUC D'ACIER OPTIMISÉ POUR PNEUS DE VÉHICULES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.06.2021 DE 102021206159**

(43) Veröffentlichungstag der Anmeldung:
**21.12.2022 Patentblatt 2022/51**

(73) Patentinhaber: **Continental Reifen Deutschland GmbH**
**30175 Hannover (DE)**

(72) Erfinder:
• **Moura, Tiago**
**30165 Hannover (DE)**

• **Kramer, Thomas**
**30165 Hannover (DE)**
• **Eichhorst, Christoph**
**30165 Hannover (DE)**

(74) Vertreter: **Continental Corporation**
**c/o Continental AG**
**Intellectual Property**
**Postfach 169**
**30001 Hannover (DE)**

(56) Entgegenhaltungen:
EP-A1- 3 279 010      EP-A2- 1 577 121
US-A1- 2012 312 441   US-A1- 2016 193 879

**Beschreibung**

Die Erfindung betrifft ein Verbundmaterial für den Einsatz in der Herstellung von Fahrzeugreifen, insbesondere von Fahrzeugluftreifen, ein hieraus herstellbares vulkanisiertes Verbundmaterial und einen entsprechenden Fahrzeugreifen umfassend das Verbundmaterial bzw. das vulkanisierte Verbundmaterial. Die Erfindung betrifft zudem die Verwendung einer spezifischen Gummierungsmischung zur Gummierung einer Anordnung von Stahlkorden zur Verringerung des Wärmeaufbaus in Fahrzeugreifen.

Der Gegenstand der Erfindung ist in den beigefügten Ansprüchen definiert.

Im Bereich der modernen Hochleistungsreifen besteht ein fortwährendes Bedürfnis danach, die Eigenschaften von Fahrzeugreifen, insbesondere von Fahrzeugluftreifen, weiter zu optimieren. Dem Fachmann ist dabei bewusst, dass die meisten der zahlreichen relevanten Eigenschaften von Fahrzeugluftreifen miteinander verknüpft sind und dass regelmäßig Zielkonflikte hinsichtlich dieser Parameter bestehen, sodass es bei vielen Entwicklungen darum geht, optimal aufeinander abgestimmte Systeme zu identifizieren, bei denen ausgewählte Eigenschaften optimiert werden können, ohne dabei die übrigen Eigenschaften des Fahrzeugreifens nachteilig zu beeinflussen.

Eine zentrale Rolle bei der Optimierung von Eigenschaften moderner Radialreifen kommt dabei der Stahlkord-Gürtellage zu. Diese Gürtellage weist eine Lage aus festen Stahlkorden auf, die einen entscheidenden Beitrag zu der Form- und Fahrstabilität des Reifens leisten und damit entscheidend für einen geringen Rollwiderstand und eine optimale Laufleistung des Reifens sind. Die hierbei eingesetzten Stahlkorde werden dabei nicht isoliert verarbeitet, sondern sind zumeist von einer sogenannten Gummierung aus einer vulkanisierten Gummierungsmischung bedeckt bzw. in dieser eingebettet.

Bei den so erhaltenen Verbundmaterialien für die Stahlkord-Gürtellage besteht der Zielkonflikt regelmäßig darin, ein verbessertes Hysterese-Verhalten und gleichzeitig eine akzeptable Steifigkeit zu erreichen. Verbundmateriale sind beispielsweise bekannt aus der US 2016/193879 A1, der EP 1577121 A2 oder der US 2012/312441 A1.

Die EP 3 279 010 A1 offenbart insoweit ein gattungsbildendes Verbundmaterial, welches aus einer gummierten Stahlkord-Anordnung besteht. Gemäß der Lehre der EP 3 279 010 A1, die wohl für eine breite Palette an unterschiedlichen Stahlkorden einsetzbar sein soll, muss zum Erhalt eines vorteilhaften Verbundmaterials die unvulkanisierte Gummierung so ausgewählt werden, dass diese nach der Vulkanisation einen komplexen elastischen Modul E* von nicht weniger als 5 MPa aufweist, wobei der dem Fachmann grundsätzlich bekannte Oberflächenparameter S nicht weniger als 60 mm betragen soll.

Die Erfinder der vorliegenden Erfindung haben sich intensiv mit der Lehre des Dokumentes EP 3 279 010 A1 beschäftigt und sind zu der Einschätzung gelangt, dass die generische Lehre dieses Dokumentes in vielen Fällen nicht in Verbundmaterialien resultiert, die die nach Einschätzung der Erfinder an entsprechenden Verbundmaterialien gestellten Anforderungen im Bereich der Hochleistungsreifen zufriedenstellend erfüllen.

Nach Einschätzung der Erfinder ist dies insbesondere dann der Fall, wenn Stahlkorde, die über einen Kern mit zwei oder mehr Stahlfilamenten und eine Ummantelung mit zwei oder mehr Stahlfilamenten, die helikal um den Kern herum gelegt sind, verfügen, eingesetzt werden sollen, was für viele anspruchsvolle Anwendungen im Bereich der Fahrzeugreifen besonders wünschenswert ist. Besonders bei der Verwendung solcher komplexen Stahlkorde in entsprechenden Verbundmaterialien wurden gemäß der Lehre der EP 3 279 010 A1 gefertigte Verbundmaterialien zuweilen als unzureichend empfunden, wobei nach Einschätzung der Erfinder insbesondere eine optimale Lösung des Zielkonflikts zwischen Steifigkeit und Hysterese-Verhalten nur schwer möglich war.

Somit war es die primäre Aufgabe der vorliegenden Erfindung, die im Stand der Technik bekannten Nachteile auszuräumen oder zumindest zu verringern.

Insbesondere war es die Aufgabe ein Verbundmaterial anzugeben, welches nach der Vulkanisation zuverlässig über ein besonders günstiges Verhältnis zwischen Steifigkeit und Hysterese-Verhalten verfügt.

Insoweit war es eine Aufgabe der vorliegenden Erfindung, dass das anzugebende Verbundmaterial die vorteilhaften Eigenschaften gerade dann zeigen sollte, wenn mehrlagige Stahlkorde als Festigkeitsträger eingesetzt werden.

Vor diesem Hintergrund war es eine Aufgabe der vorliegenden Erfindung, die zur Gummierung verwendete Mischung hinsichtlich ihrer physikalischchemischen Eigenschaften dahingehend zu optimieren, dass diese eine besonders hohe Kompatibilität mit entsprechenden mehrlagigen Stahlkorden aufweist und trotz deren anspruchsvoller Oberflächenbeschaffenheit zuverlässig eine gute Adhäsion zeigt, die zu einem beständigen Verbund führt.

Hierbei war es eine Zielsetzung, dass die das anzugebende Verbundmaterial beim späteren Einsatz in Fahrzeugreifen auf Grund des optimierten Hysterese-Verhaltens zu einem möglichst geringen Wärmeaufbau im Fahrzeugreifen beitragen solle.

Ausgehend von diesen Aufgaben war es eine ergänzende Aufgabe der vorliegenden Erfindung, ein vulkanisiertes Verbundmaterial anzugeben, welches durch Vulkanisation eines erfindungsgemäßen Verbundmaterials herstellbar ist. Ebenso war es eine Aufgabe der vorliegenden Erfindung, einen Fahrzeugreifen anzugeben, der ein erfindungsgemäßen Verbundmaterial oder ein erfindungsgemäßes vulkanisiertes Verbundmaterial umfasst.

Abschließend war es eine weitere Aufgabe der vorliegenden Erfindung, eine Verwendung für eine spezifische vernetzbare Gummierungsmischung zur Gummierung von Stahlkorden einzugeben, die zu einer Verringerung des Wärmeaufbaus in Fahrzeugreifen führt.

Die Erfinder der vorliegenden Erfindung haben erkannt, dass ein ausgezeichnetes Verhältnis von Steifigkeit und Hysterese-Verhalten für Verbundmaterialien erhalten wird, bei denen gegenüber der allgemeinen Lehre der EP 3 279 010 A1 eine spezifischere Auswahl der Gummierungsmischung getroffen wird, die insbesondere für die Kombination mit mehrlagigen Stahlkorden optimiert ist, die nach Einschätzung der Erfinder besonders hohe Anforderungen an die zur Gummierung verwendete Gummierungsmischung stellen.

Die generische Lehre der EP 3 279 010 A1 definiert nämlich lediglich, dass der komplexe Elastizitätsmodul E* nicht weniger als 5 MPa betragen darf. Der komplexe Elastizitätsmodul E* setzt sich jedoch in der Praxis aus unterschiedlichen Komponenten zusammen, nämlich dem Speichermodul E' und dem Verlustmodul E", deren Verhältnis zueinander üblicherweise über den Parameter $\tan \delta = E''/E'$ angegeben wird. Durch diesen Zusammenhang und bedingt den nach oben offenen Bereich für E* offenbart die EP 3 279 010 A1 nur eine sehr allgemeine Lehre für die Gummierungsmischung und spannt in der Praxis einen unüberschaubaren Parameterraum auf, in dem potentielle Gummierungsmischungen angeordnet werden können.

Nach Erkenntnis der Erfinder der vorliegenden Erfindung liefern jedoch eben nicht alle Gummierungsmischungen in diesem Parameterraum die erforderlichen Ergebnisse, insbesondere bei Einsatz von mehrlagigen Stahlkorden, wie es für zahlreiche Anwendungen bevorzugt ist. Die Erfinder haben nunmehr erkannt, dass der Speichermodul E' und der Verlustmodul E" sowie entsprechend das Verhältnis dieser Größen, ausgedrückt als $\tan \delta$, in einem ganz spezifischen Parameterbereich gewählt werden müssen, um auch mit den komplexeren Stahlkorden besonders leistungsfähige Verbundmaterialien zu erhalten.

Mit entsprechenden Gummierungsmischungen werden leistungsstarke Verbundmaterialien erhalten, die optimal für den Einsatz in Hochleistungsreifen geeignet sind, da sie über eine ausgezeichnete Steifigkeit verfügen und durch ihr optimiertes Hysterese-Verhalten im Einsatz im Fahrzeugreifen zu einem möglichst geringen Wärmeaufbau führen. Der Einsatz entsprechender Verbundmaterialien bzw. der durch Vulkanisation aus diesen Verbundmaterialien erhaltenen vulkanisierten Verbundmaterialien in Fahrzeugreifen, insbesondere in den Gürtellagen und in der Karkasslage von Fahrzeugluftreifen, führt zu Fahrzeugreifen mit einer ausgezeichneten Reifenhaltbarkeit.

Die vorstehend genannten Aufgaben werden entsprechend durch Verbundmaterialien, vulkanisierte Verbundmaterialien, Fahrzeugreifen und Verwendungen gelöst, wie sie in den Ansprüchen definiert sind. Bevorzugte erfindungsgemäße Ausgestaltungen ergeben sich aus den Unteransprüchen und den nachfolgenden Ausführungen.

Solche Merkmale erfindungsgemäßer Verbundmaterialien, vulkanisierter Verbundmaterialien, Fahrzeugreifen und Verwendungen, die nachfolgend als bevorzugt bezeichnet sind, werden in besonders bevorzugten Ausführungsformen mit anderen als bevorzugt bezeichneten Merkmalen kombiniert. Ganz besonders bevorzugt sind somit Kombinationen von zwei oder mehr der nachfolgend als besonders bevorzugt bezeichneten Ausführungsformen. Ebenfalls bevorzugt sind Ausführungsformen, in denen ein in irgendeinem Ausmaß als bevorzugt bezeichnetes Merkmal mit ein oder mehreren weiteren Merkmalen kombiniert wird, die in irgendeinem Ausmaß als bevorzugt bezeichnet werden. Merkmale bevorzugter erfindungsgemäßer vulkanisierter Verbundmaterialien, Fahrzeugreifen und Verwendungen ergeben sich aus den Merkmalen bevorzugter Verbundmaterialien.

Die Erfindung betrifft ein Verbundmaterial für den Einsatz in der Herstellung von Fahrzeugreifen, umfassend eine Anordnung von nebeneinander angeordneten Stahlkorden, die zumindest teilweise von einer vernetzbaren Gummierungsmischung bedeckt sind,

wobei die Stahlkorde einen Kern mit N Stahlfilamenten und eine Ummantelung mit M Stahlfilamenten, die helikal um den Kern herumgelegt sind, umfassen, wobei M und N unabhängig voneinander im Bereich von 2 bis 20 liegen,

wobei die Anordnung einen Oberflächenparameter S im Bereich von 60 bis 300 mm aufweist, wobei der Oberflächenparameter definiert ist als:

$$S = EPDM/2 * D * \pi,$$

wobei EPDM die Zahl der Stahlkorde pro Dezimeter entlang einer orthogonal zur Längsrichtung der Stahlkorde stehenden Richtung und D der mittlere Außendurchmesser der Stahlkorde ist,

wobei die vernetzbare Gummierungsmischung nach der Vulkanisation einen Speichermodul E' im Bereich von 6 bis 20 MPa, einen Verlustmodul E" im Bereich von 1 bis 5 MPa und einen $\tan \delta = E''/E'$ im Bereich von 0,08 bis 0,20 aufweist.

Die erfindungsgemäßen Verbundmaterialien sind für den Einsatz in der Herstellung von Fahrzeugreifen geeignet. Grundsätzlich lassen sich entsprechende Verbundmaterialien jedoch auch für andere Einsatzzwecke verwenden, wobei der Einsatz immer dann besonders vorteilhaft ist, wenn auch in den anderen Einsatzfeldern ein vorteilhaftes Verhältnis zwischen Steifigkeit und Hysterese-Verhalten erforderlich ist.

In dem erfindungsgemäßen Verbundmaterial liegt eine Anordnung von nebeneinander angeordneten Stahlkorden vor. Die erfindungsgemäßen Verbundmaterialien sind hinsichtlich dieser Anordnung sehr flexibel, da die vorteilhaften Eigenschaften nach Einschätzung der Erfinder vor allem auf die Wechselwirkung zwischen der Gummierungsmischung und den Stahlkorden zurückgeführt werden können. Entsprechend ist es theoretisch möglich, dass die Stahlkorde zueinander derart versetzt sind, dass sie nicht völlig parallel zueinander verlaufen. Mit Blick auf die Konstruktion eines modernen Fahrzeugreifens ist es jedoch der relevanteste Fall, dass die nebeneinander angeordneten Stahlkorde im Wesentlichen parallel zueinander verlaufen, um möglichst gleichmäßige Reifeneigenschaften zu erzielen. Dies hat mit Blick auf das Verbundmaterial zudem den großen Vorteil, dass die Dicke der Gummierung zwischen den Stahlkorden entlang der gesamten Länge der Stahlkorde im Wesentlichen gleich bleibt und sich dadurch besonders homogene Materialeigenschaften einstellen lassen. Bevorzugt ist somit ein erfindungsgemäßes Verbundmaterial, wobei die Anordnung parallel nebeneinander angeordnete Stahlkorde umfasst.

Erfindungsgemäß sind die Stahlkorde zumindest teilweise von einer vernetzbaren Gummierungsmischung bedeckt. Für bestimmte Anwendungen, insbesondere außerhalb der Reifenfertigung, kann es vorteilhaft sein, wenn einzelne Stahlkorde zumindest teilweise außerhalb der Gummierungsmischung angeordnet sind und beispielsweise aus dem Verbundmaterial hinausragen. Für die meisten Anwendungen, insbesondere für Verwendungen in Fahrzeugreifen, ist es jedoch eindeutig bevorzugt, wenn die Stahlkorde von der vernetzbaren Gummierungsmischung vollständig bedeckt sind, wobei es in vielen Fällen besonders vorteilhaft ist, wenn die entsprechenden Stahlkorde von der Gummierungsmischung umgeben und in dieser entsprechend eingebettet sind. Hierdurch wird gewährleistet, dass die spezifischen Stahlkorde der erfindungsgemäßen Verbundmaterialien im Wesentlichen vollständig von einer solchen Gummierungsmischung umgeben sind, zu der eine optimale Verträglichkeit und Adhäsion besteht. Bevorzugt ist entsprechend ein erfindungsgemäßes Verbundmaterial, wobei die Stahlkorde vollständig von der vernetzbaren Gummierungsmischung bedeckt sind, wobei die Stahlkorde bevorzugt vollständig von der vernetzbaren Gummierungsmischung umgeben sind.

Wie vorstehend erläutert, ist die Gummierungsmischung für den Einsatz mit spezifischen Stahlkorden optimiert. Auch wenn nicht ausgeschlossen werden kann, dass mit den erfindungsgemäß einzusetzenden Gummierungsmischungen auch bei weniger anspruchsvollen Stahlkorden, beispielsweise bei Monofilamenten oder einlagigen, verdrehten Stahlkorden gute Ergebnisse erzielt werden können, ist die vernetzbare Gummierungsmischung der vorliegenden Erfindung explizit für die Verwendung mit mehrlagige Stahlkorde ausgelegt, die einen Kern mit 2 bis 20 Stahlfilamenten und eine Ummantelung mit 2 bis 20 Stahlfilamenten aufweisen, wobei die Stahlfilamente der Ummantelung helikal um den Kern herumgelegt sind. Bei diesen Stahlkorden, die dem Fachmann aus dem Stand der Technik bekannt sind und die in dieser Form von zahlreichen Herstellern bezogen werden können, kann die Zahl der Stahlfilamente im Kern und in der Ummantelung unabhängig voneinander gewählt werden, sodass sich die Zahl der Stahlfilamente in den unterschiedlichen Schichten unterscheiden kann. In entsprechenden Stahlkorden werden Stahlfilamente aus üblichen Stählen eingesetzt, wobei die Erfinder keine nennenswerten Auswirkungen der Art der Stahlzusammensetzung in den verwendeten Filamenten feststellen konnten.

Analog zu vergleichbaren Materialien aus dem Stand der Technik hat es sich als zielführend erwiesen, den Oberflächenparameter S in einem bestimmten Bereich zu wählen. Der Oberflächenparameter S wird unter anderem aus dem mittleren Außendurchmesser der Stahlkorde D sowie der Kreiszahl $\pi$ (ca. 3,1416) bestimmt. Analog zu der in EP 3 279 010 A1 gegebenen Definition wird der mittlere Außendurchmesser der Stahlkorde gemäß den Normen ASTM D 2969 und ASTM D 4975 in der am 1. Juni 2021 gültigen Fassung bestimmt.

Ebenfalls analog zu der Berechnung in der EP 3 279 010 A1 geht zudem die Zahl der Stahlkorde pro Länge des Verbundmaterials in die Bestimmung des Oberflächenparameters S ein. Die vorliegend verwendete Zahl der Stahlkorde pro Dezimeter (EPDM) ist ebenso wie der Oberflächenparameter S eine dem Fachmann bekannte und geläufige Größe. Die Zahl der Stahlkorde pro Dezimeter (EPDM) wird dabei entlang einer orthogonal zur Längsrichtung der Stahlkorde stehenden Richtung bestimmt.

Sofern die Stahlkorde, wie in den meisten Fällen üblich, parallel zueinander angeordnet sind, entspricht diese Richtung der Längsrichtung sämtlicher Stahlkorde. In Verbundmaterialien, in denen die Stahlkorde nicht ausschließlich parallel zueinander angeordnet sind, entspricht die Längsrichtung im Sinne der vorliegenden Erfindung der gemittelten Längsrichtung über alle Stahlkorde.

Die orthogonal zur Längsrichtung der Stahlkorde stehende Richtung wird in Übereinstimmung mit dem fachmännischen Verständnis im Verbundmaterial im Zweifel so gewählt, dass die Zahl der Stahlkorde pro Dezimeter maximal ist, so dass Sie in einem flachen Material zumeist parallel zur Materialoberfläche durch die Stahlkord-Lage hindurch verläuft. In jedem Fall hat der Fachmann keine Probleme, diese übliche Größe in der Praxis zu bestimmen, da diese letztendlich lediglich die Zahl der Festigkeitsträger, d. h. der Stahlkorde, pro Dezimeter des Verbundmaterials definiert.

Erfindungsgemäß ist die vernetzbare Gummierungsmischung so ausgewählt, dass diese nach der Vulkanisation ein Speichermodul E' im Bereich von 6 bis 20 MPa, ein Verlustmodul E" im Bereich von 1 bis 5 MPa und ein Verhältnis dieser Größen, ausgedrückt durch tan δ im Bereich von 0,08 bis 0,20 aufweist.

Die Bestimmung des Speichermoduls E', des Verlustmoduls E" und tan δ = E"/E' erfolgt unter Verwendung eines Viskoelastizitäts-Spektrometers in Übereinstimmung mit dem japanischen Industriestandard JIS-K6394 bei einer Temperatur von 30° C, mit einer Frequenz von 10 Hz, einer anfänglichen Deformation von 10 % und einer Amplitude von +- 2 % im Zugversuch.

Die Definition der Gummierungsmischung über die Eigenschaften der durch Vulkanisation daraus herstellbare Gummierung ist in Übereinstimmung mit dem in der Branche üblichen Vorgehen und dem fachmännischen Verständnis. Ein hieraus hergestelltes vulkanisiertes Verbundmaterial umfasst entsprechend eine Gummierung, die ein Speichermodul E' im Bereich von 6 bis 20 MPa, ein Verlustmodul E" im Bereich von 1 bis 5 MPa und ein tan δ im Bereich von 0,08 bis 0,20 aufweist.

Auch wenn sich mit Blick auf den späteren Verwendungszweck für erfindungsgemäße Verbundmaterialien die vorstehende Definition des Oberflächenparameters S als zielführend erwiesen hat, sind die Erfinder der vorliegenden Erfindung davon überzeugt, dass die Gummierungsmischung mit den vorstehend definierten Eigenschaften im Zusammenspiel mit entsprechenden mehrlagigen Stahlkorden grundsätzlich besonders positive Eigenschaften ausweist und auch losgelöst von üblichen Anordnungen bessere Leistungen erzielen kann als vergleichbare Gummierungsmischungen, wobei die vorstehend genannten Vorteile entsprechend zum Tragen kommen. Entsprechend wird vorliegend auch ein alternatives Verbundmaterial offenbart, welches eng mit der vorliegenden Erfindung im Zusammenhang steht und welches ebenfalls für den Einsatz in Fahrzeugreifen geeignet ist.

Dieses ist ein alternatives Verbundmaterial, umfassend eine Anordnung von nebeneinander angeordneten Stahlkorden, die zumindest teilweise von einer vernetzbaren Gummierungsmischung bedeckt sind,

wobei die Stahlkorde einen Kern mit N Stahlfilamenten und eine Ummantelung mit M Stahlfilamenten, die helikal um den Kern herumgelegt sind, umfassen, wobei M und N unabhängig voneinander im Bereich von 2 bis 20 liegen,

wobei die vernetzbare Gummierungsmischung nach der Vulkanisation einen Speichermodul E' im Bereich von 6 bis 20 MPa, einen Verlustmodul E" im Bereich von 1 bis 5 MPa und einen tan δ = E"/E' im Bereich von 0,08 bis 0,20 aufweist.

Bevorzugte Ausführungsformen dieses alternativen Verbundmaterials sowie hieraus hergestellte vulkanisierte Verbundmaterialien und Fahrzeugreifen, ergeben sich aus den bevorzugten Ausführungsformen erfindungsgemäßer Verbundmaterialien,.

Die Erfinder der vorliegenden Erfindung konnten beim Einsatz der spezifischen Gummierungsmischung besonders geeignete Bereiche für den Oberflächenparameter identifizieren, mit denen sich besonders leistungsfähige Verbundmaterialien erhalten lassen. Bevorzugt ist nämlich ein erfindungsgemäßes Verbundmaterial, wobei die Anordnung einen Oberflächenparameter S im Bereich von 60 bis 200 mm, bevorzugt im Bereich von 60 bis 160 mm, aufweist.

Auch wenn sich in erfindungsgemäßen Verbundmaterialien mit einer breiten Palette von unterschiedlichen Stahlkorden ausgezeichnete Ergebnisse erzielen lassen, hat es sich als vorteilhaft erwiesen, die Zahl der Stahlfilamente im Kern und in der Ummantelung niedrig zu halten, da dies nach Einschätzung der Erfinder in besseren und leistungsstärkeren Verbundmaterialein resultiert. Als ganz besonders vorteilhaft wurde es gefunden, wenn der Kern weniger Stahlfilamente umfasst als die Ummantelung. Bevorzugt ist entsprechend ein erfindungsgemäßes Verbundmaterial, wobei M und N unabhängig voneinander im Bereich von 2 bis 15, bevorzugt im Bereich von 2 bis 10, liegen, wobei vorzugsweise N kleiner als M ist.

Mit Blick auf die erzielbaren Eigenschaften des erfindungsgemäßen Verbundmaterials hat es sich als besonders vorteilhaft erwiesen, solche Stahlkorde einzusetzen, die nicht nur eine helikale Ummantelung des Kerns aufweisen, sondern bei denen auch die im Kern angeordneten Stahlfilamente miteinander verdreht sind. Mit entsprechenden Stahlkorden können besonders gute Steifigkeiten erreicht werden. Bevorzugt ist folglich ein erfindungsgemäßes Verbundmaterial, wobei die Stahlfilamente im Kern der Stahlkorde miteinander verdreht sind.

Die Erfinder der vorliegenden Erfindung konnten den vorstehend angegebenen Parameterbereich bezüglich des Speichermoduls E', des Verlustmoduls E" und des tan δ als vorteilhaft identifizieren. Darüber hinaus sind die Erfinder jedoch zu der Einschätzung gelangt, dass es in diesem Bereich zwei besonders günstige Unterbereiche gibt, in denen besonders vorteilhafte Eigenschaften erzielt werden können, und in denen nach Einschätzung der Erfinder solche Verbundmaterialien liegen, bei deren Einsatz im Fahrzeugreifen eine unerwünschte Wärmeentwicklung besonders vorteilhaft reduziert werden kann. Bevorzugt ist insoweit ein erfindungsgemäßes Verbundmaterial, wobei die vernetzbare Gummierungsmischung nach der Vulkanisation einen Speichermodul E' im Bereich von 6 bis 9,5 MPa, einen Verlustmodul E" im Bereich von 1 bis 3 MPa und einen tan δ = E"/E' im Bereich von 0,10 bis 0,12 aufweist. Bevorzugt ist ebenfalls ein erfindungsgemäßes Verbundmaterial, wobei die vernetzbare Gummierungsmischung nach der Vulkanisation einen Speichermodul E' im Bereich von 9,5 bis 17 MPa, einen Verlustmodul E" im Bereich von 1 bis 3 MPa und einen tan δ = E"/E' im Bereich von 0,15 bis 0,2 aufweist.

Auch wenn es grundsätzlich möglich ist, erfindungsgemäße Verbundmaterialien in beliebigen Abmessungen auszuführen, hat es sich doch als vorteilhaft erwiesen, für die erfindungsgemäßen Verbundmaterialien eine flächige Struktur zu wählen und die Dicke nicht zu groß zu wählen. Bevorzugt ist entsprechend ein erfindungsgemäßes Verbundmaterial, wobei das Verbundmaterial eine Dicke im Bereich von 0,5 bis 5,0 mm, bevorzugt im Bereich von 0,7 bis 4,0 mm, besonders bevorzugt im Bereich von 0,9 bis 3,0 mm, aufweist, wobei das Verbundmaterial bevorzugt eine flächige Struktur aufweist, so dass die Länge und Breite des Verbundmaterials mehr als 100 mal größer ist, als die Dicke. Hierbei hat es sich als besonders vorteilhaft erwiesen, wenn das erfindungsgemäßen Verbundmaterial lediglich eine Lage an Stahlkorden umfasst.

Die Erfinder der vorliegenden Erfindung haben zudem untersucht, mit welchen Gummierungsmischungen sich nicht nur die vorstehenden Elastizitätsparameter einstellen lassen, sondern sich auch hinsichtlich der weiteren Leistungsparameter im Fahrzeugreifen gute Eigenschaften erzielen lassen.

Die nachfolgend verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen.

Vorzugsweise umfasst die Gummierungsmischung wenigstens einen Dienkautschuk. Als Dienkautschuke werden Kautschuke bezeichnet, die durch Polymerisation oder Copolymerisation von Dienen und/oder Cycloalkenen entstehen und somit entweder in der Hauptkette oder in den Seitengruppen C=C-Doppelbindungen aufweisen. Bevorzugt ist entsprechend ein erfindungsgemäßes Verbundmaterial, wobei die Gummierungsmischung wenigstens einen Dienkautschuk umfasst, wobei der Dienkautschuk bevorzugt ausgewählt ist aus der Gruppe bestehend aus natürlichem Polyisopren, synthetischem Polyisopren, epoxidiertem Polyisopren, Butadien-Kautschuk, lösungspolymerisiertem Styrol-Butadien-Kautschuk, emulsionspolymerisiertem Styrol-Butadien-Kautschuk, Polynorbornen, Ethylen-Propylen-Dien-Kautschuk, NitrilKautschuk, Acrylat-Kautschuk, Silikon-Kautschuk, Polysulfid-Kautschuk, Epichlorhydrin-Kautschuk, Styrol-Isopren-Butadien-Terpolymer, hydrierter Acrylnitrilbutadienkautschuk, Isopren-Butadien-Copolymer und hydriertem Styrol-Butadien-Kautschuk, wobei der Deinkautschuk besonders bevorzugt ausgewählt ist aus der Gruppe bestehend aus natürlichem Polyisopren (NR), synthetischem Polyisopren (IR), Butadien-Kautschuk (BR), lösungspolymerisiertem Styrol-Butadien-Kautschuk (SSBR) und emulsionspolymerisiertem Styrol-Butadien-Kautschuk (ESBR). Besonders bevorzugt umfasst der Dienkautschuk natürliches Polyisopren und/oder synthetisches Polyisopren, bevorzugt natürliches Isopren, da hiermit besonders gute Hafteigenschaften an den Stahlkorden erzielt werden können. Besonders gute Eigenschaften im Hinblick auf die Haftung ergeben sich insbesondere, wenn die Gummierungsmischung 70 bis 100 phr, bevorzugt 80 bis 100 phr, besonders bevorzugt 100 phr, an Polyisopren umfasst. Hierbei ist es besonders bevorzugt, wenn die Gummierungsmischung 100 phr natürliches Isopren umfasst. Insoweit ist es auch bevorzugt, wenn das Polyisopren ein Gewichtsmittel Mw des Molekulargewichts bestimmt mittels GPC von 250000 bis 5000000 g/mol aufweist.

Bei dem natürlichen und/oder synthetischen Polyisopren kann es sich sowohl um cis-1,4-Polyisopren als auch um 3,4-Polyisopren handeln. Bevorzugt ist allerdings die Verwendung von cis-1,4-Polyisoprenen mit einem cis-1,4 Anteil > 90 Gew.-%. Zum einen kann solch ein Polyisopren durch stereospezifische Polymerisation in Lösung mit Ziegler-Natta-Katalysatoren oder unter Verwendung von fein verteilten Lithiumalkylen erhalten werden. Zum anderen handelt es sich bei Naturkautschuk (NR) um ein solches cis-1,4 Polyisopren, bei welchem der cis-1,4-Anteil im Naturkautschuk größer 99 Gew.-% ist. Im Rahmen der vorliegenden Erfindung ist unter dem Begriff "Naturkautschuk" natürlich vorkommender Kautschuk zu verstehen, der von Hevea Gummibäumen und "Nicht-Hevea" Quellen gewonnen werden kann. Nicht-Hevea Quellen sind beispielsweise Guayule Sträucher und Löwenzahn wie beispielsweise TKS (Taraxacum koksaghyz; Russischer Löwenzahn).

Bevorzugt ist es zudem, wenn die Gummierungsmischung zumindest zwei verschiedene Dienkautschuke umfasst.

Umfasst die Gummierungsmischung als Dienkautschuk Butadien-Kautschuk (BR, auch Polybutadien), kann es sich dabei beispielsweise um cis-1,4-Polybutadien oder um trans-1,4-Polybutadien handeln. Bevorzugt ist die Verwendung von 1,4-Polybutadien mit einem cis-1,4-Polybutadien-Anteil größer 90 Gew.-%, welches z. B. durch Lösungspolymerisation in Anwesenheit von Katalysatoren vom Typ der seltenen Erden hergestellt werden kann. Ganz besonders bevorzugt ist die Verwendung von 1,4-Polybutadien mit einem cis-1,4-Polybutadien-Anteil größer 95 Gew.-%.

Bei dem Styrol-Butadien-Kautschuk kann es sich beispielsweise um lösungspolymerisiertes Styrol-Butadien-Copolymer (SSBR) mit einem Styrolgehalt, bezogen auf das Polymer, von ca. 5 bis 45 Gew.-% und einem Vinylgehalt (Gehalt an 1,2-gebundenem Butadien, bezogen auf das gesamte Polymer) von 5 bis 70 Gew.-% handeln, welches zum Beispiel unter Verwendung von Lithiumalkylen in organischem Lösungsmittel hergestellt werden kann. Die SSBR können auch gekoppelt und/oder endgruppenmodifiziert und/oder entlang der Kohlenstoffkette modifiziert (engl. backbone modified) sein. Bei der Modifizierung kann es sich beispielsweise um Hydroxy-Gruppen und/oder Ethoxy-Gruppen und/oder Epoxy-Gruppen und/oder Siloxan-Gruppen und/oder Amino-Gruppen und/oder Aminosiloxan und/oder Carboxyl-Gruppen und/oder Phthalocyanin-Gruppen und/oder Alkoxysily-Gruppen und/oder IsocyanatGruppen handeln. Dabei ist es denkbar, dass eine oder mehrere dieser Gruppen über eine gemeinsame Alkyl-Gruppe miteinander verknüpft sind.

Bevorzugt ist ein erfindungsgemäßes Verbundmaterial, wobei die Gummierungsmischung 0,1 bis 3,0 phr einer oder mehrerer Cobaltverbindungen als Haftvermittler umfasst. Vorzugsweise sind die Cobaltverbindungen ausgewählt aus der Gruppe der Cobaltsalze. Als Cobaltsalze können z. B. Cobaltstearat, -borat, -borat-alkanoate, - naphthenat, -rhodinat, -octoat, -adipat usw. verwendet werden, wobei für die Hafteigenschaften die Verwendung von Cobaltstearaten und/oder Cobaltboraten und/oder Cobaltnaphthenaten und/oder Cobaltboratalkanoate besonders vorteilhaft ist.

Bevorzugt ist ein erfindungsgemäßes Verbundmaterial, wobei die Gummierungsmischung 2,5 bis 8,0 phr, bevorzugt 3 bis 8 phr, besonders bevorzugt 5 bis 7 phr, Schwefel umfasst.

Bevorzugt ist ein erfindungsgemäßes Verbundmaterial, wobei die Gummierungsmischung 0,1 bis 100 phr eines oder mehrerer Füllstoffe umfasst, wobei die Füllstoffe ausgewählt sind aus der Gruppe bestehend aus polaren und unpolaren Füllstoffen, bevorzugt ausgewählt sind aus der Gruppe bestehend aus Ruß Aluminiumhydroxid, Titandioxid, Magnesiumoxid, Kieselsäure und Schichtsilikaten, besonders bevorzugt ausgewählt sind aus der Gruppe bestehend aus Ruß und Kieselsäure.

Ruß ist ein unpolarer Füllstoff und wird besonders bevorzugt in Mengen von 40 bis 100 phr, ganz besonders bevorzugt in Mengen von 40 bis 80 phr, in der Gummierungsmischung eingesetzt. Wiederum besonders bevorzugt ist es, wenn die Gummierungsmischung 57 bis 67 phr Ruß enthält. Hiermit werden besonders gute Mischungseigenschaften im Hinblick auf die Reißeigenschaften erzielt. Der eingesetzte Ruß weist dabei bevorzugt eine Jodadsorptionszahl gemäß ASTM D 1510 von 30 bis 110 mg/g, besonders bevorzugt von 60 bis 110 mg/g und ganz besonders bevorzugt von 70 bis 90 mg/g, auf. Die DBP-Zahl gemäß ASTM D 2414 des eingesetzten Rußes beträgt bevorzugt 20 bis 100 ml/100g, besonders bevorzugt von 50 bis 100 ml/100g und ganz besonders bevorzugt von 60 bis 80 ml/100g. Ein derartiger Ruß, mit dem in den erfindungsgemäßen Verbundmaterialien besonders gute Eigenschaften erzielt werden können, ist ein Ruß des Typs N 326 (Jodadsorptionszahl = 82 mg/g; DBP-Zahl = 72 ml/100g).

Die Kautschukmischung kann zusätzlich oder alternativ einen polaren Füllstoff enthalten. Als polare Füllstoffe können alle dem Fachmann bekannten polaren Füllstoffe, wie beispielsweise Aluminiumhydroxid, Titandioxid, Magnesiumoxid, Kieselsäure und Schichtsilikate verwendet werden. Bevorzugt werden als polare Füllstoffe Siliziumoxid-basierte Füllstoffe, wie Kieselsäure eingesetzt. Bevorzugt wird als polarer Füllstoff Kieselsäure verwendet. Die in der Kautschukindustrie eingesetzten Kieselsäuren sind in der Regel gefällte Kieselsäuren, die insbesondere nach ihrer Oberfläche charakterisiert werden. Zur Charakterisierung werden dabei die Stickstoff-Oberfläche (BET, Methode nach Brunauer, Emmett, Teller) gemäß DIN ISO 9277 und DIN 66132 als Maß für die innere und äußere Füllstoffoberfläche in $m^2/g$ und die CTAB-Oberfläche gemäß ASTM D 3765 als Maß für die äußere Oberfläche, die oftmals als die kautschukwirksame Oberfläche angesehen wird, in $m^2/g$ angegeben.

Die in erfindungsgemäßen Verbundmaterialien bevorzugt eingesetzten Kieselsäuren weisen eine Stickstoff-Oberfläche von größer oder gleich 100 $m^2/g$ auf, bevorzugt zwischen 100 und 250 $m^2/g$, besonders bevorzugt zwischen 140 und 200 $m^2/g$. Des Weiteren weisen die eingesetzten Kieselsäuren eine CTAB-Oberfläche zwischen 100 und 200 $m^2/g$, bevorzugt zwischen 120 und 180 $m^2/g$ und besonders bevorzugt zwischen 140 und 180 $m^2/g$ auf.

Bevorzugt ist ein erfindungsgemäßes Verbundmaterial, wobei die Gummierungsmischung ein oder mehrere Additive umfasst, die ausgewählt sind aus der Gruppe bestehend aus Verstärkerharzen, Methylen-Donoren, Kupplungsagenzien und Weichmachern.

Als Verstärkerharze können beispielsweise Resorcin-Formaldehyd-Harze, beispielsweise Resorcin-Hexamethoxymethylmelamin-Harze (HMMM) oder Resorcin-Hexamethylentetramin-Harze (HEXA), oder modifizierte Phenolharze eingesetzt werden.

Insbesondere enthält die Gummierungsmischung bevorzugt Methylen-Donoren wie beispielsweise Hexamethoxymethylmelamin (HMMM), die während der Vulkanisation reaktive Methylen-Gruppen abgeben.

Zur Verbesserung der Verarbeitbarkeit und zur Anbindung der Kieselsäure und anderer ggf. vorhandener polarer Füllstoffe an den Dienkautschuk können Kupplungsagenzien in der Gummierungsmischung eingesetzt werden. Als Kupplungsagenzien können dabei grundsätzlich alle dem Fachmann bekannten Kupplungsagenzien verwendet werden. Die Kupplungsagenzien, bevorzugt Silan-Kupplungsagenzien, werden bevorzugt in Mengen bis zu 20 phr, bevorzugt in Mengen von 0,1 bis 15 phr, besonders bevorzugt in Mengen von 0,5 bis 10 phr, eingesetzt.

Es können in der Gummierungsmischung auch Mengen bis zu 20 phr, bevorzugt Mengen von 0,1 bis 10 phr, besonders bevorzugt Mengen von 0,1 bis 5 phr, wenigstens eines Weichmachers vorhanden sein. Dieser Weichmacher ist bevorzugt ausgewählt aus der Gruppe bestehend aus Mineralölen, synthetischen Weichmachern, Fettsäuren, Fettsäurederivaten, Weichmacherharze, Faktisse, Glyceriden, Terpenen, Biomass-To-Liquid-Ölen (BTL-Öle) und Rubber-To-Liquid-Ölen (RTL-Öle). Unter Weichmacherharzen sind insbesondere solche Kohlenwasserstoffharze zu verstehen, die keine Verstärkerharze sind.

Bevorzugt ist ein erfindungsgemäßes Verbundmaterial, wobei die Gummierungsmischung ein oder mehrere weitere Zusatzstoffe umfasst, die ausgewählt sind aus der Gruppe bestehend aus Vernetzern, Schwefelspendern, Beschleunigern, Verzögerern, Ozonschutzmitteln, Alterungsschutzmitteln, Mastikationshilfsmittel, Verarbeitungshilfsmitteln und Aktivatoren, wobei die Gesamtmenge der weiteren Zusatzstoffe vorzugsweise bis zu 150 phr, bevorzugt bis zu 100 phr, besonders bevorzugt 5 bis 50 phr, beträgt.

Alterungsschutzmittel sind dem Fachmann für diesen Zweck bekannte Verbindungen, wie z. B. N-Phenyl-N'-(1,3-dimethylbutyl)-p-phenylendiamin (6PPD), N,N'-Diphenyl-p-phenylendiamin (DPPD), N,N'-Ditolyl-p-phenylendiamin (DTPD), N-Isopropyl-N'-phenyl-p-phenylendiamin (IPPD) oder 2,2,4-Trimethyl-1,2-dihydrochinolin (TMQ). Mastikationshilfsmittel sind bspw. Verbindungen wie z. B. 2,2'-Dibenzamidodiphenyldisulfid (DBD). Die Aktivatoren sind beispielsweise Zinkoxid oder Stearinsäure.

Bevorzugt beträgt die Menge an Zinkoxid in der Gummierungsmischung 0,1 bis 10 phr, besonders bevorzugt 2 bis 10 phr und ganz besonders bevorzugt 2 bis 6 phr. In wiederum ganz besonders bevorzugten Ausführungsformen beträgt die Menge an Zinkoxid in der Gummierungsmischung 3 bis 5 phr. Die erfindungsgemäße Gummierungsmischung kann bspw. Stearinsäure in Mengen von bis zu 1 phr, insbesondere und beispielsweise 0,5 phr, enthalten.

Der Beschleuniger ist bevorzugt ausgewählt aus der Gruppe bestehend aus Thiazol-beschleunigern, Mercaptobeschleunigern, Sulfenamidbeschleunigern, Thiocarbamatbeschleunigern, Thiurambeschleunigern, Thiophosphatbeschleunigern, Thioharnstoffbeschleunigern, Xanthogenat-Beschleunigern und Guanidin-Beschleunigern. Besonders bevorzugt ist die Verwendung eines Sulfenamidbeschleunigers, der ausgewählt ist aus der Gruppe bestehend aus N-Cyclohexyl-2-benzothiazolsufenamid (CBS), N,N-Dicyclohexylbenzothiazol-2-sulfenamid (DCBS), Benzothiazyl-2-sulfenmorpholid (MBS) und N-tert.Butyl-2-benzothiazylsulfenamid (TBBS).

Besonders bevorzugt ist ein erfindungsgemäßes Verbundmaterial, wobei die Gummierungsmischung DCBS als Beschleuniger umfasst. Dieser erweist sich aufgrund der vergleichsweise langsamen Reaktionskinetik besonders vorteilhaft für die Stahlkordhaftung der Gummierungsmischung.

Die Erfindung betrifft zudem ein vulkanisiertes Verbundmaterial, herstellbar durch Vulkanisation eines erfindungsgemäßen Verbundmaterials.

Die Erfindung betrifft darüber hinaus einen Fahrzeugreifen, insbesondere einen Fahrzeugluftreifen, umfassend ein erfindungsgemäßes Verbundmaterial oder ein erfindungsgemäßes vulkanisiertes Verbundmaterial.

Bevorzugt ist ein erfindungsgemäßer Fahrzeugreifen, wobei der Fahrzeugreifen das erfindungsgemäße Verbundmaterial oder das vulkanisierte Verbundmaterial in einer Gürtellage und/oder der Karkasslage und/oder als Wulstverstärker umfasst.

Die Erfindung betrifft abschließend auch die Verwendung einer vernetzbaren Gummierungsmischung zur Gummierung einer Anordnung von Stahlkorden zur Verringerung des Wärmeaufbaus in Fahrzeugreifen,

wobei die vernetzbare Gummierungsmischung nach der Vulkanisation einen Speichermodul E' im Bereich von 6 bis 20 MPa, einen Verlustmodul E" im Bereich von 1 bis 5 MPa und einen tan $\delta$ = E"/E' im Bereich von 0,08 bis 0,20 aufweist, und

wobei die Stahlkorde einen Kern mit N Stahlfilamenten und eine Ummantelung mit M Stahlfilamenten, die helikal um den Kern herumgelegt sind, umfassen, wobei M und N unabhängig voneinander im Bereich von 2 bis 20 liegen.

Bevorzugt ist eine erfindungsgemäße Verwendung, wobei die Anordnung einen Oberflächenparameter S im Bereich von 60 bis 300 mm aufweist, wobei der Oberflächenparameter definiert ist als:

$$S = EPDM/2 * D * \pi,$$

wobei EPDM die Zahl der Stahlkorde pro Dezimeter entlang einer orthogonal zur Längsrichtung der Stahlkorde stehenden Richtung und D der mittlere Außendurchmesser der Stahlkorde ist.

Nachfolgend werden bevorzugte Ausführungsformen der Erfindung unter Bezugnahme auf die beiliegenden experimentellen Daten näher erläutert und beschrieben.

Es wurden Verbundmaterialien mit einer Anordnung von nebeneinander angeordneten Stahlkorden hergestellt, wobei die Stahlkorde vollständig in einer Gummierungsmischung eingebettet sind. Die hierbei eingesetzten Stahlkorde weisen einen Kern mit 3 Stahlfilamenten und eine Ummantelung mit 8 Stahlfilamenten, die helikal um den Kern herumgelegt sind, auf. Der Oberflächenparameter S beträgt 81,4, bei einem Durchmesser der Stahlkorde von 1,44 mm und einem EPDM von 36.

Hierbei wurden verschiedene Gummierungsmischungen eingesetzt. Die Herstellung der Gummierungsmischungen erfolgt nach dem in der Kautschukindustrie üblichen Verfahren in einem Labortangentialmischer, bei dem zunächst in ein oder mehreren Mischstufen eine Grundmischung mit allen Bestandteilen außer dem Vulkanisationssystem (Schwefel und vulkanisationsbeeinflussende Substanzen) hergestellt wird. Durch Zugabe des Vulkanisationssystems in einer letzten Mischstufe wird die Gummierungsmischung erzeugt, mit der die Festigkeitsträger teilweise oder vollständig ummantelt werden. Dies geschieht durch Kalandrieren der Gummierungsmischungen, wobei aus den Gummierungsmischungen dünne Platten hergestellt werden, welche oben und unten auf den Festigkeitsträger aufgebracht werden. Dabei erfolgt die Penetration der Kautschukmischung an und in die Festigkeitsträger. Nach Zuschnitt werden diese mit den Gummierungsmischungen versehenen Festigkeitsträger in üblicher Weise weiterverarbeitet.

Die Zusammensetzung der untersuchten Gummierungsmischungen sind in Tabelle 1 zusammengefasst. Die an den entsprechenden, bei 160 °C vulkanisierten Proben bestimmten Materialeigenschaften sind in Tabelle 2 zusammengestellt.

Tabelle 1

| Bestandteile | Einheit | E1 | E2 | V1 |
|---|---|---|---|---|
| Polyisopren | phr | 100 | 75 | 0 |
| ESBR | phr | 0 | 25 | 100 |
| Ruß N326 | phr | 65 | 65 | 65 |
| Harze a) | phr | 4 | 4 | 4 |
| Alterungsschutzmittel b) | phr | 3 | 3 | 3 |
| Zinkoxid | phr | 4 | 4 | 4 |
| Stearinsäure | phr | 0,5 | 0,5 | 0,5 |
| Beschleuniger DCBS | phr | 1 | 1 | 1 |
| Schwefel, ölverstreckt c) | phr | 9 | 9 | 9 |
| Cobaltsalz d) | phr | 0,4 | 0,4 | 0,4 |
| a) Harze: Resorcin-Formaldehydharz (8 bis 18 Gew.-% freies Resorcin) und HMMM (65 Gew.-% HMMM auf Kieselsäure aufgezogen); b) Alterungsschutzmittel: 6PPD, TMQ c) Schwefel ölverstreckt, 33,3 Gew.-% Öl d) Cobalt-Salz: Co-Borat-Alkanoat, 22,5 Gew.-% Cobalt | | | | |

Tabelle 2

| Größen | Einheit | E1 | E2 | V1 |
|---|---|---|---|---|
| Rückprallelast. b. RT | % | 43 | 40 | 36 |
| Shore-Härte b. RT | Shore A | 79 | 81 | 84 |
| Zugfestigkeit | MPa | 16 | 16 | 17 |
| Speichermodul E' | MPa | 16 | 20 | 35 |
| Verlustmodul E" | MPa | 3 | 4 | 7 |
| tan $\delta$ = E"/E' | - | 0,10 | 0,12 | 0,18 |

Die Rückprallelastizität bei Raumtemperatur wurde gemäß DIN 53 512 in der am 1. Juni 2021 gültigen Fassung bestimmt.

Die Shore-A-Härte bei Raumtemperatur wurde gemäß DIN 53 505 in der am 1. Juni 2021 gültigen Fassung bestimmt

Die Bestimmung des Speichermoduls E', des Verlustmoduls E" und tan $\delta$ = E"/E' erfolgte unter Verwendung eines Viskoelastizitäts-Spektrometers in Übereinstimmung mit dem japanischen Industriestandard JIS-K6394 bei einer Temperatur von 30° C, mit einer Frequenz von 10 Hz, einer anfänglichen Deformation von 10 % und einer Amplitude von +- 2 % im Zugversuch.

Für Fahrzeugreifen, in denen die erfindungsgemäßen Verbundmaterialien mit den Gummierungsmischungen E1 und E2 eingesetzt werden, ergeben sich überraschend jeweils eine deutlich verbesserte Hysterese bei gleichzeitig akzeptabler Steifigkeit, so dass eine besonders vorteilhafte Reifenhaltbarkeit erzielt wird. In diesen Reifen wird der unerwünschte Wärmeaufbau im Einsatz gegenüber den Vergleichsmaterialien V1 reduziert.

# EP 4 105 369 B1

**Patentansprüche**

1. Verbundmaterial für den Einsatz in der Herstellung von Fahrzeugreifen, umfassend eine Anordnung von nebeneinander angeordneten Stahlkorden, die zumindest teilweise von einer vernetzbaren Gummierungsmischung bedeckt sind,

   wobei die Stahlkorde einen Kern mit N Stahlfilamenten und eine Ummantelung mit M Stahlfilamenten, die helikal um den Kern herumgelegt sind, umfassen, wobei M und N unabhängig voneinander im Bereich von 2 bis 20 liegen,

   wobei die Anordnung einen Oberflächenparameter S im Bereich von 60 bis 300 mm aufweist, wobei der Oberflächenparameter definiert ist als:

$$S = EPDM/2 * D * \pi,$$

   wobei EPDM die Zahl der Stahlkorde pro Dezimeter entlang einer orthogonal zur Längsrichtung der Stahlkorde stehenden Richtung und D der mittlere Außendurchmesser der Stahlkorde ist, wobei der mittlere Außendurchmesser D der Stahlkorde gemäß den Normen ASTM D 2969 und ASTM D 4975 in der am 1. Juni 2021 gültigen Fassung bestimmt wird
   wobei die vernetzbare Gummierungsmischung nach der Vulkanisation einen Speichermodul E' im Bereich von 6 bis 20 MPa aufweist, **dadurch gekennzeichnet, dass** die vernetzbare Gummierungsmischung nach der Vulkanisation einen Verlustmodul E" im Bereich von 1 bis 5 MPa und einen $\tan \delta = E''/E'$ im Bereich von 0,08 bis 0,20 aufweist, wobei eine Bestimmung des Speichermoduls E', des Verlustmoduls E" und $\tan \delta = E''/E'$ erfolgt, unter Verwendung eines Viskoelastizitäts-Spektrometers in Übereinstimmung mit dem japanischen Industriestandard JIS-K6394 bei einer Temperatur von 30° C, mit einer Frequenz von 10 Hz, einer anfänglichen Deformation von 10 % und einer Amplitude von +- 2 % im Zugversuch.

2. Verbundmaterial nach Anspruch 1, wobei die Anordnung einen Oberflächenparameter S im Bereich von 60 bis 200 mm, bevorzugt im Bereich von 60 bis 160 mm, aufweist.

3. Verbundmaterial nach einem der Ansprüche 1 oder 2, wobei M und N unabhängig voneinander im Bereich von 2 bis 15, bevorzugt im Bereich von 2 bis 10, liegen, wobei vorzugsweise N kleiner als M ist.

4. Verbundmaterial nach einem der Ansprüche 1 bis 3, wobei die vernetzbare Gummierungsmischung nach der Vulkanisation einen Speichermodul E' im Bereich von 6 bis 9,5 MPa, einen Verlustmodul E" im Bereich von 1 bis 3 MPa und einen $\tan \delta = E''/E'$ im Bereich von 0,10 bis 0,12 aufweist.

5. Verbundmaterial nach einem der Ansprüche 1 bis 3, wobei die vernetzbare Gummierungsmischung nach der Vulkanisation einen Speichermodul E' im Bereich von 9,5 bis 17 MPa, einen Verlustmodul E" im Bereich von 1 bis 3 MPa und einen $\tan \delta = E''/E'$ im Bereich von 0,15 bis 0,2 aufweist.

6. Verbundmaterial nach einem der Ansprüche 1 bis 5, wobei die Gummierungsmischung 0,1 bis 3,0 phr einer oder mehrerer Cobaltverbindungen als Haftvermittler umfasst.

7. Vulkanisiertes Verbundmaterial, herstellbar durch Vulkanisation eines Verbundmaterials nach einem der Ansprüche 1 bis 6.

8. Fahrzeugreifen, insbesondere Fahrzeugluftreifen, umfassend ein Verbundmaterial nach einem der Ansprüche 1 bis 6 oder ein vulkanisiertes Verbundmaterial nach Anspruch 7.

9. Fahrzeugreifen nach Anspruch 8, wobei der Fahrzeugreifen das Verbundmaterial oder das vulkanisierte Verbundmaterial in einer Gürtellage und/oder der Karkasslage und/oder als Wulstverstärker umfasst.

10. Verwendung einer vernetzbaren Gummierungsmischung zur Gummierung eines Verbundmaterials nach einem der Ansprüche 1-6, umfassend eine Anordnung von Stahlkorden zur Verringerung des Wärmeaufbaus in Fahrzeugreifen, wobei die vernetzbare Gummierungsmischung nach der Vulkanisation einen Speichermodul E' im Bereich von 6 bis 20 MPa, einen Verlustmodul E" im Bereich von 1 bis 5 MPa und einen $\tan \delta = E''/E'$ im Bereich von 0,08 bis 0,20 aufweist, und wobei die Stahlkorde einen Kern mit N Stahlfilamenten und eine Ummantelung mit M Stahlfilamenten, die helikal um den Kern herumgelegt sind, umfassen, wobei M und N unabhängig voneinander im Bereich von 2 bis 20 liegen.

**Claims**

1. Composite material for use in the production of vehicle tyres comprising an arrangement of steel cords arranged side-by-side which are at least partially covered by a crosslinkable rubberization mixture,

   wherein the steel cords comprise a core having N steel filaments and a sheathing having M steel filaments which are helically wrapped around the core, wherein M and N are independently of one another in the range from 2 to 20,
   wherein the arrangement has a surface parameter S in the range from 60 to 300 mm, wherein the surface parameter is defined as:

$$S = EPDM/2 * D * \pi,$$

   wherein EPDM is the number of steel cords per decimetre along a direction orthogonal to the longitudinal direction of the steel cords and D is the average external diameter of the steel cords, wherein the average external diameter D of the steel cords is determined according to the standards ASTM D 2969 and ASTM D 4975 as valid at 1 June 2021,
   wherein after vulcanization the crosslinkable rubberization mixture has a storage modulus E' in the range from 6 to 20 MPa, **characterized in that** after vulcanization the crosslinkable rubberization mixture has a loss modulus E" in the range from 1 to 5 MPa and a tan $\delta$ = E"/E' in the range from 0.08 to 0.20, wherein determination of the storage modulus E', the loss modulus E" and tan $\delta$ = E"/E' is carried out using a viscoelasticity spectrometer in accordance with the Japanese industrial standard JIS-K6394 at a temperature of 30°C, a frequency of 10 Hz, an initial deformation of 10% and an amplitude of +- 2% in the tensile test.

2. Composite material according to Claim 1, wherein the arrangement has a surface parameter S in the range from 60 to 200 mm, preferably in the range from 60 to 160 mm.

3. Composite material according to either of Claims 1 and 2, wherein M and N are independently of one another in the range from 2 to 15, preferably in the range from 2 to 10, wherein N is preferably smaller than M.

4. Composite material according to any of Claims 1 to 3, wherein after vulcanization the crosslinkable rubberization mixture has a storage modulus E' in the range from 6 to 9.5 MPa, a loss modulus E" in the range from 1 to 3 MPa and a tan $\delta$ = E"/E' in the range from 0.10 to 0.12.

5. Composite material according to any of Claims 1 to 3, wherein after vulcanization the crosslinkable rubberization mixture has a storage modulus E' in the range from 9.5 to 17 MPa, a loss modulus E" in the range from 1 to 3 MPa and a tan $\delta$ = E"/E' in the range from 0.15 to 0.2.

6. Composite material according to any of Claims 1 to 5, wherein the rubberization mixture comprises 0.1 to 3.0 phr of one or more cobalt compounds as adhesion promoter.

7. Vulcanized composite material producible by vulcanization of a composite material according to any of Claims 1 to 6.

8. Vehicle tyre, in particular pneumatic vehicle tyre, comprising a composite material according to any of Claims 1 to 6 or a vulcanized composite material according to Claim 7.

9. Vehicle tyre according to Claim 8, wherein the vehicle tyre comprises the composite material or the vulcanized composite material in a belt ply and/or the carcass ply and/or as bead reinforcement.

10. Use of a crosslinkable rubberization mixture for rubberization of a composite material according to any of Claims 1-6 comprising an arrangement of steel cords for reducing heat buildup in vehicle tyres,
    wherein after vulcanization the crosslinkable rubberization mixture has a storage modulus E' in the range from 6 to 20 MPa, a loss modulus E" in the range from 1 to 5 MPa and a tan $\delta$ = E"/E' in the range from 0.08 to 0.20 and wherein the steel cords comprise a core having N steel filaments and a sheathing having M steel filaments which are helically wrapped around the core, wherein M and N are independently of one another in the range from 2 to 20.

**Revendications**

1. Matière composite destinée à l'utilisation dans la fabrication de pneumatiques d'automobiles, comprenant un arrangement de câbles d'acier disposés les uns à côté des autres, qui sont au moins partiellement revêtus avec une composition d'engommage réticulable,

   dans laquelle les câbles d'acier comprennent une âme à N filaments d'acier et une gaine à M filaments d'acier qui sont enroulés en hélice autour de l'âme, M et N se situant indépendamment l'un de l'autre dans la plage de 2 à 20,
   dans laquelle l'arrangement présente un paramètre de surface S dans la plage de 60 à 300 mm, le paramètre de surface étant défini comme :

$$S = EPDM/2 * D * \pi,$$

   où EPDM est le nombre des câbles d'acier par décimètre le long d'une direction qui est orthogonale à la direction longitudinale des câbles d'acier et D le diamètre externe moyen des câbles d'acier, le diamètre externe moyen D des câbles d'acier étant déterminé conformément aux normes ASTM D 2969 et ASTM D 4975 dans la version en vigueur au 1$^{er}$ Juin 2021
   la composition d'engommage réticulable présentant après la vulcanisation un module d'accumulation E' dans la plage de 6 à 20 MPa, **caractérisée en ce que** la composition d'engommage présente après la vulcanisation un module de perte E" dans la plage de 1 à 5 MPa et une tan $\delta$ = E"/E' dans la plage de 0,08 à 0,20, une détermination du module d'accumulation E', du module de perte E" et de tan $\delta$ = E"/E' étant effectuée en utilisant un spectromètre de viscoélasticité en conformité avec la norme industrielle japonaise JIS-K6394 à une température de 30 °C, à une fréquence de 10 Hz, à une déformation initiale de 10 % et à une amplitude de +- 2 % dans l'essai de traction.

2. Matière composite selon la revendication 1, dans laquelle l'arrangement présente un paramètre de surface S dans la plage de 60 à 200 mm, de préférence dans la plage de 60 à 160 mm.

3. Matière composite selon l'une quelconque des revendications 1 et 2, dans laquelle M et N se situent indépendamment l'un de l'autre dans la plage de 2 à 15, de préférence dans la plage de 2 à 10, N étant de préférence inférieur à M.

4. Matière composite selon l'une quelconque des revendications 1 à 3, dans laquelle la composition d'engommage réticulable présente après la vulcanisation un module d'accumulation E' dans la plage de 6 à 9,5 MPa, un module de perte E" dans la plage de 1 à 3 MPa et une tan $\delta$ = E"/E' dans la plage de 0,10 à 0,12.

5. Matière composite selon l'une quelconque des revendications 1 à 3, dans laquelle la composition d'engommage réticulable présente après la vulcanisation un module d'accumulation E' dans la plage de 9,5 à 17 MPa, un module de perte E" dans la plage de 1 à 3 MPa et une tan $\delta$ = E"/E' dans la plage de 0,15 à 0,2.

6. Matière composite selon l'une quelconque des revendications 1 à 5, dans laquelle la composition d'engommage comprend 0,1 à 3,0 phr d'un ou de plusieurs composés de cobalt en tant que promoteur(s) d'adhérence.

7. Matière composite vulcanisée, pouvant être produite par vulcanisation d'une matière composite selon l'une quelconque des revendications 1 à 6.

8. Pneumatique de véhicule, en particulier pneumatique à air de véhicule, comprenant une matière composite selon l'une quelconque des revendications 1 à 6 ou une matière composite vulcanisée selon la revendication 7.

9. Pneumatique de véhicule selon la revendication 8, le pneumatique de véhicule comprenant la matière composite ou la matière composite vulcanisée dans une couche de ceinture et/ou dans la couche de carcasse et/ou en tant que renforçateur de talon.

**10.** Utilisation d'une composition d'engommage pour l'engommage d'une matière composite selon l'une quelconque des revendications 1-6, comprenant un arrangement de câbles d'acier destiné à la réduction de l'accumulation de chaleur dans des pneumatiques de véhicules,

dans laquelle la composition d'engommage présente après la vulcanisation un module d'accumulation E' dans la plage de 6 à 20 MPa, un module de perte E" dans la plage de 1 à 5 MPa et une tan $\delta$ = E"/E' dans la plage de 0,08 à 0,20, et dans laquelle les câbles d'acier comprennent une âme à N filaments d'acier et une gaine à M filaments d'acier qui sont enroulés en hélice autour de l'âme, M et N se situant indépendamment l'un de l'autre dans la plage de 2 à 20,

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2016193879 A1
- EP 1577121 A2
- US 2012312441 A1

- EP 3279010 A1